# EUROPEAN PATENT APPLICATION

(11) **EP 4 475 208 A1**
(43) Date of publication of application: **11.12.2024**
(21) Application number: 24178444.6
(22) Date of filing: 28.05.2024
(51) Int. Cl.: H01M 4/131, H01M 4/525, H01M 4/02

(54) **POSITIVE ELECTRODE FOR STACK-TYPE RECHARGEABLE LITHIUM BATTERIES AND STACK-TYPE RECHARGEABLE LITHIUM BATTERIES**

(30) Priority: 08.06.2023 KR 20230073466
(71) Applicant: Samsung SDI Co., Ltd., Yongin-si, Gyeonggi-do 17084 (KR)
(72) Inventor: SON, Jungwoo, 17084 Yongin-si (KR); KWON, Seonyoung, 17084 Yongin-si (KR); OH, Eunok, 17084 Yongin-si (KR); OH, Yuntaek, 17084 Yongin-si (KR); KANG, Minkyeong, 17084 Yongin-si (KR); KWAK, Taehee, 17084 Yongin-si (KR)
(74) Representative: Marks & Clerk LLP

(57) **Abstract**

A positive electrode for a stack-type rechargeable lithium battery includes a current collector, a first positive electrode active material layer on one surface of the current collector, and a second positive electrode active material layer on the other surface of the current collector, wherein a loading level of the first positive electrode active material layer is about 5% or more higher than a loading level of the second positive electrode active material layer, each of the first positive electrode active material layer and the second positive electrode active material layer includes a first positive electrode active material in the form of secondary particles and a second positive electrode active material in the form of single particles, an average particle diameter of secondary particles of the first positive electrode active material is larger than an average particle diameter of single particles of the second positive electrode active material.

## Description

### BACKGROUND

### 1. Field

One or more embodiments of the present disclosure relate to positive electrodes for a stack-type or kind rechargeable lithium battery (e.g., a stack rechargeable lithium battery) and stack-type or kind rechargeable lithium batteries including the positive electrodes.

### 2. Description of the Related Art

A portable information device, such as a cell phone, a laptop, a smart phone, and/or the like, and/or an electric vehicle, has utilized a rechargeable lithium battery having relatively high energy density and easy portability as a driving power source. Recently, research has been actively conducted to utilize a rechargeable lithium battery with high energy density as a driving power source for hybrid and/or electric vehicles and/or a power storage power source for home power storage unit, e.g., a power wall.

In order to increase the energy density of rechargeable lithium batteries, improving positive electrode active materials is important and researched. Recently, positive electrode active materials have been developed to increase a nickel content (e.g., amount) and decrease a cobalt content (e.g., amount) in order to increase the energy density of rechargeable lithium batteries and lower unit costs. Such a high nickel-based or cobalt-free nickel-based positive electrode active material may realize relatively high capacity but have a disadvantage of relatively low charge/discharge efficiency due to cation mixing and/or the like during the synthesis thereof. As such, a positive electrode with the relatively low charge/discharge efficiency is greatly affected by a cell design, resulting in significant changes in electrochemical characteristics such as capacity and cycle-life characteristics and/or the like. Accordingly, the cell design needs to be improved or optimized in a rechargeable lithium battery, to which materials with a relatively low charge/discharge efficiency are applied, to improve cycle-life characteristics as well as maintain high energy density.

### SUMMARY

According to one or more aspects of the present disclosure, by improving or optimizing a cell design in a stack-type or kind positive electrode with high capacity but relatively low charge/discharge efficiency, a utilization rate based on a same positive electrode active material (e.g., a positive electrode active material having a relatively low charge/discharge efficiency) inside the cell is increased (cell capacity is increased) and/or cycle-life characteristics are improved. Additional aspects will be set forth in part in the description which follows and, in part, will be apparent from the description, or may be learned by practice of the presented embodiments of the disclosure.

According to one or more embodiments of the present disclosure, a positive electrode for a stack-type or kind rechargeable lithium battery includes a positive electrode current collector, a first positive electrode active material layer on one surface of the positive electrode current collector, and a second positive electrode active material layer on the other surface (e.g., a surface opposite the one surface) of the positive electrode current collector, wherein a loading level of the first positive electrode active material layer is about 5% or more higher than a loading level of the second positive electrode active material layer, each of the first positive electrode active material layer and the second positive electrode active material layer includes a first positive electrode active material in the form of secondary particles including a plurality of primary particles (e.g., each of the secondary particles being made by agglomerating a plurality of primary particles) and a second positive electrode active material in the form of single particles (e.g., each being a single monolithic particle), an average particle diameter (D₅₀) of secondary particles of the first positive electrode active material is larger than an average particle diameter (D₅₀) of single particles of the second positive electrode active material, the first positive electrode active material and the second positive electrode active material independently each include a compound represented by Chemical Formula 1 or a compound represented by Chemical Formula 2.

According to one or more embodiments of the present disclosure, a stack-type or kind rechargeable lithium battery includes the positive electrode and a negative electrode.

At least some of the above and other features of the invention are set out in the claims.

The stack-type or kind positive electrode and the rechargeable lithium battery according to one or more embodiments have improved cycle-life characteristics and specific capacity while implementing high energy density.

### BRIEF DESCRIPTION OF DRAWINGS

The above and other aspects, features, and advantages of certain embodiments of the present disclosure will be more apparent from the following description taken in conjunction with the accompanying drawings.
FIG. 1 is a graph showing cycle-life characteristics of stack-type or kind rechargeable lithium battery cells according to Example 1 and Comparative Example 1 in one or more embodiments of the present disclosure.
FIG. 2 is a graph showing cycle-life characteristics of stack-type or kind rechargeable lithium battery cells according to Comparative Examples 2 and 3 of the present disclosure.

### DETAILED DESCRIPTION

Hereinafter, example embodiments will be described in more detail so that those of ordinary skill in the art can easily implement them. However, the present disclosure may be embodied in many different forms and is not construed as limited to the example embodiments set forth herein.

The terminology utilized herein is utilized to describe embodiments only, and is not intended to limit the present disclosure. As used herein, the singular forms "a," "an," and "the" are intended to include the plural forms as well, unless the context clearly indicates otherwise. Further, the utilization of "may" when describing embodiments of the present disclosure refers to "one or more embodiments of the present disclosure".

As utilized herein, "combination thereof" may refer to a mixture, a laminate, a composite, a copolymer, an alloy, a blend, a reaction product, and/or the like of the constituents.

Herein, it should be understood that terms such as "comprise(s)/comprising," "include(s)/including," or "have(has)/having" are intended to designate the presence of an embodied feature, number, operation, element, and/or a (e.g., any suitable) combination thereof, but it does not preclude the possibility of the presence or addition of one or more other features, numbers, operations, elements, and/or a (e.g., any suitable) combination thereof.

In the drawings, the thickness of layers, films, panels, regions, and/or the like, may be exaggerated for clarity, and like reference numerals designate like elements throughout the present disclosure, and duplicative descriptions thereof may not be provided for conciseness. It will be understood that if (e.g., when) an element such as a layer, film, region, or substrate is referred to as being "on" another element, it may be directly on the other element or intervening elements may also be present. In contrast, if (e.g., when) an element is referred to as being "directly on" another element, there are no intervening elements present.

In one or more embodiments, the term "layer" as utilized herein may include not only a shape or a layer formed on the whole surface if (e.g., when) viewed from a plan view, but also a shape or a layer formed on a partial surface.

In one or more embodiments, an average particle diameter of particles may be measured by a method well suitable to those skilled in the art, for example, may be measured by a particle size analyzer, for example, HORIBA, LA-950 laser particle size analyzer, or may be measured by a transmission electron microscope (TEM) or a scanning electron microscope (SEM). In one or more embodiments, it may obtain an average particle diameter value by measuring it utilizing a dynamic light scattering method, performing data analysis, counting the number of particles for each particle size range, and calculating from the data. Unless otherwise defined, the average particle diameter may refer to the diameter (D₅₀) of particles having a cumulative volume of 50 volume% in the particle size distribution. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, "diameter" indicates an average particle diameter, and when the particles are non-spherical, the "diameter" indicates a major axis length.

Herein, "or" is not to be construed as an exclusive meaning, for example, "A or B" is construed to include A, B, A+B, and/or the like. Further, as utilized herein, the term "and/or" includes any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

As utilized herein, the term "metal" is interpreted as a concept including ordinary metals, transition metals, and metalloids (semi-metals).

### Positive Electrode

In one or more embodiments, a positive electrode for a stack-type or kind rechargeable lithium battery may include a positive electrode current collector, a first positive electrode active material layer on one surface of the positive electrode current collector, and a second positive electrode active material layer on the other surface (e.g., a surface opposite the one surface) of the current collector, wherein a loading level of the first positive electrode active material layer may be about 5% or more higher than a loading level of the second positive electrode active material layer. In one or more embodiments, each of the first positive electrode active material layer and the second positive electrode active material layer may include a first positive electrode active material in the form of secondary particles including a plurality of primary particles (e.g., each of the secondary particles being made by agglomerating a plurality of primary particles) and a second positive electrode active material in the form of single particles (e.g., each being a monolithic particle), an average particle diameter (D₅₀) of secondary particles of the first positive electrode active material is larger than an average particle diameter (D₅₀) of single particles of the second positive electrode active material, and the first positive electrode active material and the second positive electrode active material may each independently include a compound represented by Chemical Formula 1 or a compound represented by Chemical Formula 2.

**Chemical Formula 1** **Liₐ₁Niₓ₁M¹_{y1}M²_{z1}O_{2-b1}X_{b1}**

In Chemical Formula 1, 0.9≤a1≤1.2, 0.88≤x1≤1, 0≤y1≤0.12, 0≤z1≤0.12, 0.9≤x1+y1+z1≤1.1, and 0≤b1≤0.1, M¹ and M² may each independently be one or more elements of (e.g., selected from among) aluminium (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), tin (Sn), strontium (Sr), titanium (Ti), vanadium (V), tungsten (W), zinc (Zn), and zirconium (Zr), and X may be one or more elements of (e.g., selected from among) fluorine (F), phosphorous (P), and sulfur (S).

**Chemical Formula 2** **Liₐ₂Niₓ₂Mn_{y2}M³_{z2}O_{2-b2}X_{b2}**

In Chemical Formula 2, 0.9≤a2≤1.8, 0.7≤x2<1, 0<y2≤0.3, 0≤z2≤0.3, 0.9≤ x2+y2+z2≤1.1, and 0≤b2≤0.1, M³ may be one or more elements of (e.g., selected from among) Al, B, Ba, Ca, Ce, Cr, Cu, Fe, Mg, Mo, Nb, Si, Sn, Sr, Ti, V, W, Zn, and Zr, and X may be one or more elements of (e.g., selected from among) F, P, and S.

In one or more embodiments, the first positive electrode active material layer may include both (e.g., simultaneously) the first positive electrode active material and the second positive electrode active material, and the second positive electrode active material layer may include both (e.g., simultaneously) the first positive electrode active material and the second positive electrode active material, wherein a loading level of the first positive electrode active material layer is about 5% or more higher than a loading level of the second positive electrode active material layer. The first positive electrode active material is in the form of secondary particles and has a larger particle diameter (average particle diameter, such as D₅₀) than that of the second positive electrode active material, and may be therefore expressed herein as large particle bodies, large particles, and/or the like. The second positive electrode active material is in the form of a single particle rather than a secondary particle, and has a smaller particle size than the secondary particles of the first positive electrode active material, and may be therefore expressed herein as small particle bodies, small particles, and/or the like.

The compositions of the first positive electrode active material and the composition of the second positive electrode active material may be the same or different. The first positive electrode active material and the second positive electrode active material each independently include a compound represented by Chemical Formula 1 or a compound represented by Chemical Formula 2. The compound represented by Chemical Formula 1 may be a high nickel-based lithium composite oxide with a nickel content (e.g., amount) of greater than or equal to about 88 mol% based on a total mole of metals included in the compound excluding lithium. The compound represented by Chemical Formula 2 may be expressed as a cobalt-free lithium composite oxide or a cobalt-free lithium nickel manganese-based oxide. In present disclosure, "not include a or any 'component'" "exclude a or any 'component'", "'component'-free", and/or the like refers to that the "component" not being added, selected or utilized as a component in the composition/element/structure, but, in some embodiments, the "component" of less than a suitable amount may still be included due to other impurities and/or external factors.

A positive electrode active material according to one or more embodiments has a high nickel-based composition of Chemical Formula 1 or a cobalt-free composition of Chemical Formula 2 and a mixture of secondary particles and single particles, and a positive electrode containing the positive electrode active material may realize high capacity and high energy density but has a disadvantage of relatively low charging and discharging efficiency. This type or kind of positive electrode has electrochemical properties that change significantly depending on the cell design, and thus optimal or suitable design is desired or required. In some embodiments, loading levels on both surfaces (e.g., opposite surfaces or sides) of the positive electrode current collector are designed to be different, and the loading level of the first positive electrode active material layer on one surface is about 5% or more higher than the loading level of the second positive electrode active material layer on the other surface, and thereby, the second positive electrode active material layer with a relatively low loading level improves the cycle-life characteristics, and the first positive electrode active material layer with a high loading level compensates for capacity, resulting in improving cycle-life characteristics and increasing the specific capacity while maintaining the energy density and charge/discharge efficiency of the positive electrode at substantially the same level. These effects may be maximized or increased in a positive electrode with relatively low charge/discharge efficiency by applying a high nickel-based or cobalt-free high nickel-based positive electrode active material. For example, in comparative embodiments of a positive electrode utilizing a lithium cobalt-based positive electrode active material with generally high charge/discharge efficiency, even if the loading levels on both surfaces (e.g., opposite surfaces or sides) of the positive electrode are designed differently as in some embodiments of the present disclosure, the effect of improving cycle-life characteristics has not be found, and even in comparative embodiments of high nickel-based, high-efficiency positive electrodes composed only of secondary particles, there is no improvement in cycle-life characteristics, and/or the like, even if the loading levels on both surfaces (e.g., opposite surfaces or sides) of the positive electrode are varied. Additionally, the effect of the cell design according to one or more embodiments of the present disclosure is maximized or increased in the structure of a stack-type or kind rechargeable lithium battery. For example, it is difficult to apply the same logic or strategy to a wound-type or kind rechargeable lithium battery.

In other words, designing the loading levels of both surfaces (e.g., opposite surfaces or sides) of the positive electrode differently refers to designing an N/P ratio (a ratio of negative electrode plate capacity to positive electrode plate capacity, and electrode plate capacity is active material capacity X (i.e., times) active material amount X (times) loading level) of both surfaces (e.g., opposite surfaces or sides) of the positive electrode to be different. According to one or more embodiments, the N/P ratio of the first positive electrode active material layer is designed to be lower than the N/P ratio of the second positive electrode active material layer. For example, the first positive electrode active material layer is designed to have a higher loading level and a lower N/P ratio compared to the second positive electrode active material layer. In one or more embodiments, it may refer to that in a stack-type or kind rechargeable lithium battery, the loading levels on both surfaces (e.g., opposite surfaces or sides) of the negative electrode are designed to be substantially the same, and only the loading levels on both surfaces (e.g., opposite surfaces or sides) of the positive electrode are designed to be different, so that the N/P ratios on both surfaces (e.g., opposite surfaces or sides) of the positive electrode are designed to be different from each other.

Herein, the term "loading level" refers to a weight per unit area of the positive electrode (mg/cm²). In general, a positive electrode with a positive electrode active material layer formed on a current collector can be manufactured by applying a positive electrode slurry containing a positive electrode active material to a current collector, drying, and rolling. The loading level is designed in the process of applying the positive electrode slurry to the current collector. The higher the loading level, the greater the amount of positive electrode slurry applied, the thicker the thickness of the positive electrode active material layer formed, and the lower the density of the positive electrode. Therefore, if the loading levels on both sides of the current collector are different, the density on both sides may be different, and for example, a low-density positive electrode active material layer may be rolled more times to bring the density of both sides to a similar level.

A loading level being about 5% or more higher refers to that if (e.g., when) the loading level of the first positive electrode active material layer is A and the loading level of the second positive electrode active material layer is B, a value of {(A-B)/A x 100} is about 5% or more (i.e. percentage change relative to the loading level of the first positive electrode active material layer, A). In one or more embodiments, the loading level of the first positive electrode active material layer (as a percentage change relative to the loading level of the first positive electrode active material layer, A) may be higher by about 5% or more, for example about 6% or more, about 7% or more, about 8% or more, or about 9% or more than the loading level of the second positive electrode active material layer (e.g. higher by about 5% to about 30%, about 6% to about 30%, about 7% to about 30%, about 8% to about 30%, about 9% to about 30%; about 5% to about 20%, about 6% to about 20%, about 7% to about 20%, about 8% to about 20%, about 9% to about 20%; about 5% to about 15%, about 6% to about 15%, about 7% to about 15%, about 8% to about 15%, about 9% to about 15%; about 5% to about 10%, about 6% to about 10%, about 7% to about 10%, about 8% to about 10%, or about 9% to about 10%). The loading level of the first positive electrode active material layer may be about 1 mg/cm² or higher, about 1.5 mg/cm² or higher, or about 2.0 mg/cm² or higher compared to the loading level of the second positive electrode active material layer (e.g. higher by about 1 mg/cm² to 5.0 mg/cm², about 1.5 mg/cm² to 5.0 mg/cm², about 2.0 mg/cm² to 5.0 mg/cm²; about 1 mg/cm² to 4.0 mg/cm², about 1.5 mg/cm² to 4.0 mg/cm², about 2.0 mg/cm² to 4.0 mg/cm²; about 1 mg/cm² to 3.0 mg/cm², about 1.5 mg/cm² to 3.0 mg/cm², or about 2.0 mg/cm² to 3.0 mg/cm²). If designed in this way, the utilization rate in the cell may be increased and cycle-life characteristics may be improved based on the utilization of the same positive electrode active material.

The N/P ratio during discharging of the first positive electrode active material layer may be lower by about 5% or more, for example, about 6% or more, about 7% or more, about 8% or more, or about 9% or more than the N/P ratio during discharging of the second positive electrode active material layer (e.g. lower by about 5% to about 30%, about 6% to about 30%, about 7% to about 30%, about 8% to about 30%, about 9% to about 30%; about 5% to about 20%, about 6% to about 20%, about 7% to about 20%, about 8% to about 20%, about 9% to about 20%; about 5% to about 15%, about 6% to about 15%, about 7% to about 15%, about 8% to about 15%, about 9% to about 15%; about 5% to about 10%, about 6% to about 10%, about 7% to about 10%, about 8% to about 10%, or about 9% to about 10%). This refers to that if (e.g., when) the N/P ratio of the first positive electrode active material layer is C and the N/P ratio of the second positive active material layer is D, a value of {(D-C)/C x 100} is about 5% or more. The N/P ratio if (e.g., when) discharging the first positive electrode active material layer may be smaller by about 0.1 or more than the N/P ratio if (e.g., when) discharging the second positive electrode active material layer. If designed in this way, cell capacity may be increased by improving cycle-life characteristics and increasing utilization rate. The discharge may be carried out under constant current conditions in a range of 0.1 C to 1.0 C, or 0.1 C to 0.33 C at 25 °C, for example, under constant current conditions of 0.2 C, from 4.5 V to 3.0 V, or from 4.25 V to 3.0 V. For example, the N/P ratio may be measured under conditions of constant current (0.2 C) and constant voltage (4.25 V, 0.05 C cut-off), paused for 10 minutes, and discharged to 3.0 V under conditions of a constant current (0.2 C) at 25 °C, on a positive electrode-separator-negative electrode-separator-positive electrode multi-layered pouch cell, the negative electrode being a double-surface negative electrode (e.g. graphite-based double-surface negative electrode) with a single-surface loading level fixed at 16.67 mg/cm², and the positive electrode being a single-surface positive electrode.

In one or more embodiments, the N/P ratio of the second positive electrode active material layer during charging may be about 1.00 or more, for example, about 1.10 or more (e.g. about 1.00 to 1.50, about 1.10 to about 1.50; about 1.00 to 1.30, about 1.10 to about 1.30; about 1.00 to 1.20, or about 1.10 to about 1.20). The charging may be, for example, charging from 3.0 V to 4.25 V under a 0.2 C constant current condition, or a 0.2 C constant current and then a constant voltage at 25 °C.

The positive electrode according to one or more embodiments may be a high-density, low-efficiency positive electrode design. For example, the initial charge/discharge efficiency of the positive electrode may be less than about 89%, for example, about 88% or less, or about 87% or less. It may be expressed that the initial charge/discharge efficiency of the entire positive electrode active material including the first and second positive electrode active materials in the positive electrode may be less than about 89%. In other words, it may be a positive electrode utilizing a positive electrode active material with an efficiency of less than about 89%. Additionally, the current density of the positive electrode may be about 4 (e.g., 4.0) mA/cm² or more, for example, about 4.1 mA/cm² or more, or about 4.2 mA/cm² or more.

The compound represented by Chemical Formula 1 may be a high nickel-based lithium composite compound. In Chemical Formula 1, the nickel content (e.g., amount) may be about 88 mol% or more, about 90 mol% or more, or about 91 mol% or more based on a total mole of metals included in the compound excluding lithium. In Chemical Formula 1 0.9≤x1≤1, 0≤y1≤0.1, and 0≤z1≤0.1, or 0.91≤x1≤1, 0≤y1≤0.09, and 0≤z1≤0.09.

In one or more embodiments, the high nickel-based compound represented by Chemical Formula 1 may be, for example, a lithium nickel cobalt-based composite oxide represented by Chemical Formula 3, or, in some embodiments, a compound represented by Chemical Formula 4, that is, a lithium nickel-cobalt-aluminium oxide, or a lithium nickel-cobalt-manganese oxide.

**Chemical Formula 3** **Liₐ₃Niₓ₃Co_{y3}M⁴_{z3}O_{2-b3}X_{b3}**

In Chemical Formula 3, 0.9≤a3≤1.2, 0.88≤x3<1, 0<y3≤0.12, 0≤z3≤0.12, 0.9 ≤x3+y3+z3≤1.1, and 0≤b3≤0.1, M⁴ may be one or more elements of (e.g., selected from among) Al, B, Ba, Ca, Ce, Cr, Cu, Fe, Mg, Mn, Mo, Nb, Si, Sn, Sr, Ti, V, W, and Zr, and X may be one or more elements of (e.g., selected from among) F, P, and S.

In some embodiments, in Chemical Formula 3, 0.88≤x3≤0.99, 0.01≤y3≤ 0.12, and 0≤z3≤0.12, or 0.9≤x3≤0.99, 0.01≤y3≤0.1, and 0.01≤z3≤0.1.

**Chemical Formula 4** **Liₐ₄Niₓ₄Co_{y4}M⁵_{z4}M⁶_{w4}O_{2-b4}X_{b4}**

In Chemical Formula 4, 0.9≤a4≤1.2, 0.88≤x4≤0.98, 0.01≤y4≤0.11, 0.01≤z4 ≤0.11, 0≤w4≤0.10, 0.9≤x4+y4+z4+w4≤1.1, and 0≤b4≤0.1, M⁵ may be one or more elements of (e.g., selected from among) Al and Mn, M⁶ may be one or more elements of (e.g., selected from among) B, Ba, Ca, Ce, Cr, Cu, Fe, Mg, Mo, Nb, Si, Sn, Sr, Ti, V, W, and Zr, and X may be one or more elements of (e.g., selected from among) F, P, and S.

In some embodiments, in Chemical Formula 4, for example 0.9≤x4≤0.98, 0.01≤y4≤0.09, 0.01≤z4≤0.09, and 0≤w4≤0.08.

In one or more embodiments, the nickel content (e.g., amount) in the cobalt-free compound represented by Chemical Formula 2 may be about 70 mol% or more, for example, about 75 mol% or more, about 80 mol% or more, or about 90 mol% or more based on all metals included in the cobalt-free compound excluding lithium. Herein, cobalt-free refers to that there is no cobalt, that no cobalt is utilized, or that it contains only a very small amount of cobalt. In one or more embodiments, the compound represented by Chemical Formula 2 may also be a layered cobalt-free positive electrode active material. In Chemical Formula 2, the manganese content (e.g., amount) may be about 0 mol% or more, for example, about 1 mol% or more, about 5 mol% or more, or about 10 mol% or more based on all metals included in the compound except lithium. In Chemical Formula 2, for example, 0.7≤x2≤0.99, 0.01≤y2 ≤0.3, and 0≤z2≤0.29, 0.75≤x2≤0.99, 0.01≤y2≤0.25, and 0≤z2≤0.24, or 0.75≤x2≤ 0.95, 0.05≤y2≤0.25, and 0≤z2≤0.24.

The first positive electrode active material may be in the form of secondary particles in which at least two or more primary particles are agglomerated, for example, in a polycrystal form. The second positive electrode active material is in the single particle form, exists alone without a grain boundary within the particle, is composed of one particle, and has a single particle, a monolith structure, an one body structure, or a non-agglomerated particle, in which particles are not agglomerated with each other but exist as an independent phase in terms of morphology, and may be expressed as a single particle (one body particle, single grain), for example, as a single crystal.

An average particle diameter (e.g. D₅₀) of the secondary particles of the first positive electrode active material is larger than an average particle diameter (e.g. D₅₀) of the single particles of the second positive electrode active material. For example, the average particle diameter (e.g. D₅₀) of the secondary particles of the first positive electrode active material may be about 5 microns (µm) to about 25 µm, about 7 µm to about 25 µm, about 10 µm to about 20 µm, or about 12 µm to about 18 µm. The average particle diameter (e.g. D₅₀) of the single particles of the second positive electrode active material may be about 1 µm to about 10 µm, for example, about 1 µm to about 8 µm, about 1 µm to about 6 µm, or about 2 µm to about 5 µm. When the first positive electrode active material and the second positive active material each satisfy the above particle size ranges, a mixture density may be improved and high capacity and energy density may be realized. Herein, in one or more embodiments, the average particle diameter of the first positive electrode active material may be measured by randomly selecting about 20 secondary particles from a scanning electron micrograph of the positive electrode active material, and taking the diameter of the particle with a cumulative volume of 50 volume% from a particle size distribution (D₅₀) as the average particle diameter. In one or more embodiments, the average particle diameter of the second positive electrode active material may be measured by randomly selecting about 20 single particles from a scanning electron micrograph of the positive electrode active material, and taking the diameter of the particle with a cumulative volume of 50 volume% from a particle size distribution (D₅₀) as the average particle diameter.

In one positive electrode active material layer, that is, in any one selected from among the first positive electrode active material layer and the second positive electrode active material layer, the first positive electrode active material may be included in an amount of about 60 wt% to about 95 wt% and the second positive electrode active material may be included in an amount of about 5 wt% to about 40 wt% based on a total amount of the first positive electrode active material and the second positive electrode active material. For example, in some embodiments, the first positive electrode active material may be included in an amount of about 60 wt% to about 90 wt%, or about 70 wt% to about 90 wt%, and the second positive electrode active material may be included in an amount of about 10 wt% to about 40 wt%, or about 10 wt% to about 30 wt%. When the content (e.g., amount) ratio of the first positive electrode active material and the second positive electrode active material satisfies the above ranges, the positive electrode active material may achieve high capacity, improve mixture density, and exhibit high energy density.

In one or more embodiments, the positive electrode active material layer (e.g., any one selected from among the first positive electrode active material layer and the second positive electrode active material layer) may further include a binder and/or a conductive material in addition to the aforementioned positive electrode active material.

The binder improves binding properties of positive electrode active material particles with one another and with a positive electrode current collector. Examples of binders may include polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, and/or nylon, but embodiments of the present disclosure are not limited thereto. A content (e.g., amount) of the binder in the positive electrode active material layer may be approximately about 0.1 wt% to about 5 wt%, or about 0.5 wt% to about 3 wt% based on a total weight of the positive active material layer.

The conductive material may be included to provide electrode conductivity and any electrically conductive material may be utilized as a conductive material unless it causes a chemical change. Examples of the conductive material may include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; or a (e.g., any suitable) mixture thereof. A content (e.g., amount) of the conductive material in the positive electrode active material layer may be about 0.1 wt% to about 5 wt%, or about 0.5 wt% to about 3 wt% based on a total weight of the positive active material layer.

The positive electrode current collector may utilize aluminium foil, stainless steel (SUS), and/or the like, but embodiments of the present disclosure are not limited thereto.

### Stack-type or kind Rechargeable Lithium Battery

According to one or more embodiments of the present disclosure, a stack-type or kind rechargeable lithium battery may include the aforementioned positive electrode and a negative electrode. The rechargeable lithium battery may be a type or kind of lithium ion battery including a separator between the positive electrode and the negative electrode and a liquid electrolyte, but embodiments of the present disclosure are not limited thereto. A stack-type or kind rechargeable lithium battery may refer to a battery in which electrode plates are stacked, and is distinguished from a coiled or jelly roll type or kind, and may also be called a stacked type or kind battery. The cell design according to one or more embodiments may be suitable for application to a stack-type or kind battery. The stack-type or kind battery referred to here is a structure in which the jelly rolls of the positive electrode-separator-negative electrode combination are in substantially uniform contact on all surfaces without any curved surfaces, and are repeatedly stacked in a positive electrode-separator-negative electrode-separator-positive electrode combination.

### Negative Electrode

The negative electrode for a rechargeable lithium battery may include a negative electrode current collector and a negative electrode active material layer on the negative electrode current collector. The negative electrode active material layer may include a negative electrode active material and may further include a binder and/or a conductive material.

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example, crystalline carbon, amorphous carbon, and/or a (e.g., any suitable) combination thereof as a carbon-based negative electrode active material. The crystalline carbon may be irregular-shaped, or sheet-shaped, flake-shaped, spherical-shaped, or fiber shaped natural graphite or artificial graphite. The amorphous carbon may be a soft carbon, a hard carbon, a mesophase pitch carbonization product, calcined coke, and/or the like.

The lithium metal alloy may include an alloy of lithium and a metal of (e.g., selected from among) sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn) (e.g. sodium (Na), potassium (K), rubidium (Rb), cesium (Cs), beryllium (Be), magnesium (Mg), calcium (Ca), strontium (Sr), silicon (Si), antimony (Sb), lead (Pb), indium (In), zinc (Zn), barium (Ba), germanium (Ge), aluminium (Al), and tin (Sn)).

The material capable of doping/dedoping lithium may be a Si-based negative electrode active material or a Sn-based negative electrode active material. The Si-based negative electrode active material may include silicon, a silicon-carbon composite, SiOₓ (0 < x < 2), a Si-Q alloy, wherein Q is an alkali metal, an alkaline-earth metal, a Group 13 element, a Group 14 element, a Group 15 element, a Group 16 element, a transition metal, a rare earth element, and/or a (e.g., any suitable) combination thereof, but not Si, and the Sn-based negative electrode active material may include Sn, SnO₂, a Sn-R alloy, wherein R is an alkali metal, an alkaline-earth metal, a Group 13 element, a Group 14 element, a Group 15 element, a Group 16 element, a transition metal, a rare earth element, and/or a (e.g., any suitable) combination thereof, but not Sn. At least one of (e.g., selected from among) these materials may be mixed with SiO₂. The elements Q and R may be one or more of (e.g., selected from among) magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), thallium (Tl), germanium (Ge), phosphorus (P), arsenic (As), antimony (Sb), bismuth (Bi), sulfur (S), selenium (Se), tellurium (Te), polonium (Po), and/or a (e.g., any suitable) combination thereof (e.g. magnesium (Mg), calcium (Ca), strontium (Sr), barium (Ba), scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), rhenium (Re), iron (Fe), lead (Pb), ruthenium (Ru), osmium (Os), rhodium (Rh), iridium (Ir), palladium (Pd), platinum (Pt), copper (Cu), silver (Ag), gold (Au), zinc (Zn), cadmium (Cd), boron (B), aluminium (Al), gallium (Ga), tin (Sn), indium (In), thallium (Tl), germanium (Ge), phosphorus (P), arsenic (As), antimony (Sb), bismuth (Bi), sulfur (S), selenium (Se), tellurium (Te), and/or a (e.g., any suitable) combination thereof).

In one or more embodiments, the negative electrode active material may include silicon-carbon composite particles. An average particle diameter (D₅₀) of the silicon-carbon composite particles may be, for example, about 0.5 µm to about 20 µm. The average particle diameter (D₅₀) is measured with a particle size analyzer and refers to the diameter of particles with a cumulative volume of 50 volume% in a particle size distribution. Based on 100 wt% of the silicon-carbon composite particles, silicon may be included in an amount of about 10 wt% to about 60 wt% and carbon may be included in an amount of about 40 wt% to about 90 wt%. In some embodiments, the silicon-carbon composite particle may include a core including silicon particles, and a carbon coating layer on the surface of the core. The average particle diameter (D₅₀) of the silicon particles in the core may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x<2). In one or more embodiments, a thickness of the carbon coating layer may be about 5 nm to 100 nm.

In one or more embodiments, the silicon-carbon composite particle may include a core including silicon particles and crystalline carbon, and a carbon coating layer on the surface of the core and including amorphous carbon. For example, in some embodiments, in the silicon-carbon composite particle, amorphous carbon may not exist in the core but only in the carbon coating layer. The crystalline carbon may be artificial graphite, natural graphite, and/or a (e.g., any suitable) combination thereof, and the amorphous carbon may be formed from coal-based pitch, mesophase pitch, petroleum-based pitch, coal-based oil, heavy petroleum oil, or polymer resin (phenol resin, furan resin, polyimide resin, and/or the like). In one or more embodiments, a content (e.g., amount) of the crystalline carbon may be about 10 wt% to about 70 wt%, and a content (e.g., amount) of the amorphous carbon may be about 20 wt% to about 40 wt% based on 100 wt% of the silicon-carbon composite particles.

In the silicon-carbon composite particle, the core may include a void in the center. A radius of the void may be about 30% to about 50% of a radius of the silicon-carbon composite particle.

The aforementioned silicon-carbon composite particles may effectively suppress or reduce problems such as volume expansion, structural collapse, or particle crushing due to charging and discharging, prevent or reduce disconnection of conductive paths, achieve high capacity and high efficiency, and is advantageous for utilization in high voltage or fast charging conditions.

The Si-based negative electrode active material or the Sn-based negative electrode active material may be mixed with a carbon-based negative electrode active material. When the Si-based negative electrode active material or the Sn-based negative electrode active material and the carbon-based negative electrode active material are mixed and utilized, a mixing ratio may be a weight ratio of about 1:99 to about 90:10.

In the negative electrode active material layer, the negative electrode active material may be included in an amount of about 95 wt% to about 99 wt% based on a total weight of the negative electrode active material layer.

In one or more embodiments, the negative electrode active material layer further includes a binder, and may optionally further include a conductive material. A content (e.g., amount) of the binder in the negative electrode active material layer may be about 1 wt% to about 5 wt% based on a total weight of the negative electrode active material layer. In one or more embodiments, if (e.g., when) the conductive material is further included, the negative electrode active material layer may include about 90 wt% to about 98 wt% of the negative electrode active material, about 1 wt% to about 5 wt% of the binder, and about 1 wt% to about 5 wt% of the conductive material.

The binder serves to well adhere the negative electrode active material particles to one another and also to adhere the negative electrode active material to the negative electrode current collector. The binder may be a water-insoluble binder, a water-soluble binder, and/or a (e.g., any suitable) combination thereof.

Non-limiting examples of the water-insoluble binder may include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, and/or a (e.g., any suitable) combination thereof.

The water-soluble binder may include a rubber binder and/or a polymer resin binder. The rubber binder may be one or more of (e.g., selected from among) a styrene-butadiene rubber, an acrylated styrene-butadiene rubber, an acrylonitrile-butadiene rubber, an acrylic rubber, a butyl rubber, a fluororubber, and/or a (e.g., any suitable) combination thereof. The polymer resin binder may be one or more of (e.g., selected from among) polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and/or a (e.g., any suitable) combination thereof.

If (e.g., when) a water-soluble binder is utilized as the negative electrode binder, a cellulose-based compound capable of imparting viscosity (e.g., as a thickener) may be further included. As the cellulose-based compound, one or more of (e.g., selected from among) carboxymethyl cellulose, hydroxypropylmethyl cellulose, methyl cellulose, and alkali metal salts thereof may be mixed and utilized. The alkali metal may be Na, K, or Li. An amount of the thickener utilized may be about 0.1 parts by weight to about 3 parts by weight based on 100 parts by weight of the negative electrode active material.

In one or more embodiments, the conductive material may be included to provide electrode conductivity, and any electrically conductive material may be utilized as a conductive material unless it causes a chemical change. Non-limiting examples of the conductive material may include a carbon-based material such as natural graphite, artificial graphite, carbon black, acetylene black, Ketjen black, a carbon fiber, carbon nanofiber, carbon nanotube, and/or the like; a metal-based material of a metal powder or a metal fiber including copper, nickel, aluminium, silver, and/or the like; a conductive polymer such as a polyphenylene derivative; or a (e.g., any suitable) mixture thereof.

The negative electrode current collector may include one of (e.g., selected from among) a copper foil, a nickel foil, a stainless-steel foil, a titanium foil, a nickel foam, a copper foam, a polymer substrate coated with a conductive metal, and/or a (e.g., any suitable) combination thereof.

In one or more embodiments, the negative electrode may include a negative electrode current collector, a first negative electrode active material layer on one surface of the negative electrode current collector, and a second negative electrode active material layer on the other surface (e.g., a surface opposite the one surface) of the negative electrode current collector. In this regard, loading levels on both surfaces (e.g., opposite surfaces or sides) of the negative electrode current collector may be substantially the same. For example, in one or more embodiments, a difference between a loading level of the first negative electrode active material layer and a loading level of the second negative electrode active material layer may be about 0 mg/cm² to about 0.6 mg/cm², about 0 mg/cm² to about 0.5 mg/cm², about 0 mg/cm² to about 0.4 mg/cm², about 0 mg/cm² to about 0.3 mg/cm², about 0 mg/cm² to about 0.2 mg/cm², or about 0 mg/cm² to about 0.1 mg/cm². In a stack-type or kind rechargeable lithium battery according to one or more embodiments, the loading levels on both surfaces (e.g., opposite surfaces or sides) of the negative electrode are designed to be substantially the same, and only the loading levels on both surfaces (e.g., opposite surfaces or sides) of the positive electrode are designed to be different, which may refer to that the N/P ratios on both surfaces (e.g., opposite surfaces or sides) of the positive electrode are designed to be different from each other.

### Electrolyte

The electrolyte (e.g., the liquid electrolyte) may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or an aprotic solvent. Non-limiting examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. Non-limiting examples of the ester-based solvent may include methyl acetate, ethyl acetate, n-propyl acetate, dimethyl acetate, methyl propionate, ethyl propionate, γ-butyrolactone, decanolide, valerolactone, mevalonolactone, caprolactone, and/or the like. The ether-based solvent may be dibutyl ether, tetraglyme, diglyme, dimethoxyethane, 2-methyltetrahydrofuran, tetrahydrofuran, and/or the like, and the ketone-based solvent may be cyclohexanone, and/or the like. In one or more embodiments, the alcohol-based solvent may be ethyl alcohol, isopropyl alcohol, and/or the like, and the aprotic solvent may be nitriles such as R-CN, where R is a C2 to C20 linear, branched, or cyclic hydrocarbon group and may include a double bond, an aromatic ring, or an ether bond, amides such as dimethylformamide, dioxolanes such as 1,3-dioxolane, sulfolanes, and/or the like.

The non-aqueous organic solvent may be utilized alone or in a mixture. If (e.g., when) the organic solvent is utilized in a mixture, a mixture ratio may be controlled or selected in accordance with a desirable battery performance.

In one or more embodiments, a carbonate-based solvent, a mixture of a cyclic carbonate and a chain carbonate may be utilized. In these embodiments, if (e.g., when) the cyclic carbonate and the chain carbonate are mixed in a volume ratio of about 1:1 to about 1:9, the electrolyte solution may exhibit excellent or suitable performance.

In one or more embodiments, the non-aqueous organic solvent may further include an aromatic hydrocarbon-based organic solvent in addition to the carbonate-based solvent. In these embodiments, the carbonate-based solvent and the aromatic hydrocarbon-based organic solvent may be mixed in a volume ratio of about 1:1 to about 30:1.

The aromatic hydrocarbon-based solvent may be an aromatic hydrocarbon-based compound represented by Chemical Formula I.

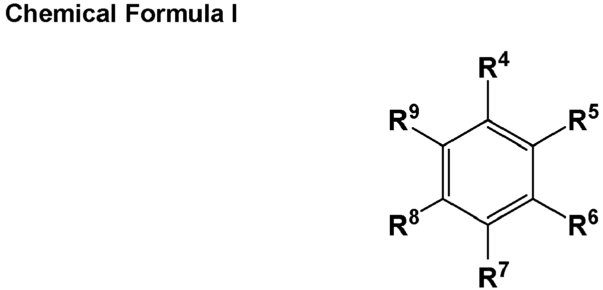

In Chemical Formula I, R⁴ to R⁹ may be the same or different and may each independently be one of (e.g., selected from among) hydrogen, a halogen, a C1 to C10 alkyl group, a C1 to C10 haloalkyl group, and/or a (e.g., any suitable) combination thereof.

Non-limiting examples of the aromatic hydrocarbon-based solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and/or a (e.g., any suitable) combination thereof.

In one or more embodiments, the electrolyte solution may further include vinylene carbonate or an ethylene carbonate-based compound represented by Chemical Formula II as an additive in order to improve cycle-life of a battery.

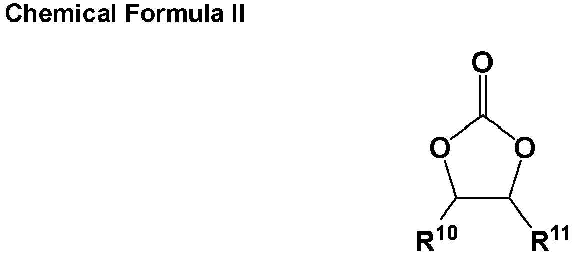

In Chemical Formula II, R¹⁰ and R¹¹ may be the same or different and may each independently be one of (e.g., selected from among) hydrogen, a halogen, a cyano group, a nitro group, and a fluorinated C1 to C5 alkyl group, provided that at least one of R¹⁰ or R¹¹ is a halogen, a cyano group, a nitro group, or a fluorinated C1 to C5 alkyl group, and R¹⁰ and R¹¹ are not concurrently (e.g., simultaneously) hydrogen.

Non-limiting examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, and/or fluoroethylene carbonate. An amount of the additive for improving cycle-life may be utilized within an appropriate or suitable range.

The lithium salt dissolved in the non-organic solvent supplies lithium ions in a battery, enables a basic operation of a rechargeable lithium battery, and improves transportation of the lithium ions between positive and negative electrodes.

Non-limiting examples of the lithium salt may include at least one supporting salt of (e.g., selected from among) LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide; LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are each a natural number, for example, an integer in a range of 1 to 20, lithium difluoro(bisoxalato) phosphate, LiCl, Lil, LiB(C₂O₄)₂ (lithium bis(oxalato) borate; LiBOB), and lithium difluoro(oxalato)borate (LiDFOB).

The lithium salt may be utilized in a concentration in a range of about 0.1 M to about 2.0 M. When the lithium salt is included at the above concentration range, the electrolyte may have excellent or suitable performance and lithium ion mobility due to optimal or suitable electrolyte conductivity and viscosity.

### Separator

The separator separates the positive and negative electrodes and provides a passage for lithium ions to move, and any type or kind commonly utilized in lithium ion batteries may be utilized. In other words, it may have relatively low resistance to ion transport and excellent or suitable impregnation for an electrolyte. For example, the separator may be one of (e.g., selected from among) a glass fiber, polyester, polyethylene, polypropylene, polytetrafluoroethylene, and/or a (e.g., any suitable) combination thereof. It may have a form of a non-woven fabric or a woven fabric. For example, in a lithium ion battery, a polyolefin-based polymer separator such as polyethylene and polypropylene is mainly utilized. In order to ensure the heat resistance or mechanical strength, in one or more embodiments, a coated separator including a ceramic component and/or a polymer material may be utilized. In one or more embodiments, it may have a mono-layered or multi-layered structure.

Rechargeable lithium batteries may be classified as lithium ion batteries, lithium ion polymer batteries, or lithium polymer batteries according to the presence of a separator and the type or kind of electrolyte utilized therein. The rechargeable lithium batteries may have a variety of shapes and sizes, and include cylindrical, prismatic, coin, or pouch-type or kind batteries, and may be thin film batteries or may be rather bulky in size. Structures and manufacturing methods for rechargeable lithium batteries pertaining to this disclosure are well suitable in the art.

The rechargeable lithium battery according to one or more embodiments has high capacity and has excellent or suitable storage stability, cycle-life characteristics, and high rate characteristics at high temperatures, so that it may be utilized in in electric vehicles (EV), hybrid vehicles such as plug-in hybrid electric vehicles (PHEV), and may also be utilized in portable electronic devices.

Hereinafter, examples and comparative examples are described. It is to be understood, however, that the examples are for the purpose of illustration and are not to be construed as limiting the present disclosure.

### Example 1

### 1. Manufacture of Positive Electrode

A first positive electrode active material represented by a chemical formula of Li_{1.05}Ni_{0.91}Co_{0.05}Al_{0.04}O₂, being in the form of secondary particles made by agglomerating a plurality of primary particles, the secondary particles having an average particle diameter (D₅₀) of about 15 µm, and a second positive electrode active material represented by a chemical formula of Li_{1.05}Ni_{0.91}Co_{0.05}Al_{0.04}O₂, being in the form of single particles, and having an average particle diameter (D₅₀) of about 2.7 µm were mixed in a weight ratio of 7:3 to prepare a positive electrode active material.

97.7 wt% of the positive electrode active material was mixed with 1.3 wt% of a polyvinylidene fluoride binder and 1.0 wt% of a carbon nanotube conductive material in an N-methylpyrrolidone solvent to prepare a positive electrode active material slurry. The positive electrode active material slurry was coated on both surfaces (e.g., opposite surfaces or sides) of an aluminium current collector and then, dried at 120 °C for 1 hour and rolled to manufacture a stack-type or kind positive electrode, wherein a loading level of a first positive electrode active material layer on one surface of the aluminium current collector was 26.4 mg/cm², while a loading level of a second positive electrode active material layer on the other surface of the aluminium current collector was 24.0 mg/cm². The loading level of the first positive electrode active material layer was about 9.1 % higher than that of the second positive electrode active material layer. Herein, a positive electrode was designed to have current density of about 4.2 mA/cm².

### 2. Manufacture of Stack-type or kind Rechargeable Lithium Battery Cells

97 wt% of a graphite negative electrode active material, 1.5 wt% of a styrene butadiene rubber binder, 1.5 wt% of carboxymethyl cellulose, and a distilled water solvent were mixed to prepare a negative electrode active material slurry, and the negative electrode active material slurry was coated on both surfaces (e.g., opposite surfaces or sides) of a copper current collector and then, dried and rolled to manufacture a negative electrode, and the negative electrode had a loading level of 33.34 mg/cm² on both surfaces (e.g., opposite surfaces or sides) (a single surface: 16.67 mg/cm²).

After stacking a separator with a polyethylene polypropylene multi-layer structure on the positive electrode, the negative electrode was stacked thereon, which was repeated to manufacture a positive electrode-separator-negative electrode-separator-positive electrode multi-layer structure cell, and the cell was inserted into a case. After mixing ethylene carbonate, ethylmethyl carbonate, and dimethyl carbonate in a volume ratio of 2:4:4 and adding 1.15 M of LiPF₆ lithium salt thereto to prepare a basic electrolyte solution and then, adding 1.5 parts by weight of vinylene carbonate and 0.5 parts by weight of vinyl ethylene carbonate to 100 parts by weight of the basic electrolyte solution to prepare a final electrolyte solution, this final electrolyte solution was injected into the case to manufacture a stack-type or kind rechargeable lithium battery cell.

### Comparative Example 1

A positive electrode and a rechargeable lithium battery cell were manufactured substantially in the same manner as in Example 1 except that the first and second positive electrode active material layers were formed to each have a loading level of 25.5 mg/cm².

### Comparative Example 2

A positive electrode and a rechargeable lithium battery cell were manufactured substantially in the same manner as in Example 1 except that secondary particles made by agglomerating a plurality of primary particles and having an average particle diameter (D₅₀) of about 3 µm was utilized as the second positive electrode active material.

### Comparative Example 3

A positive electrode and a rechargeable lithium battery cell were manufactured substantially in the same manner as in Comparative Example 1 except that secondary particles made by agglomerating a plurality of primary particles and having an average particle diameter (D₅₀) of about 3 µm was utilized as the second positive electrode active material.

### Reference Examples 1 to 3

Each rechargeable lithium battery cell was manufactured substantially in the same manner as in Example 1 except that a double-surface negative electrode with a single-surface loading level fixed at 16.67 mg/cm² was utilized and each loading level of a single-surface positive electrode was changed respectively to 24.0, 25.5, and 26.4 mg/cm² to manufacture a positive electrode-separator-negative electrode-separator-positive electrode multi-layered pouch cell. Table 1 shows an N/P ratio during the charge and an N/P ratio during the discharge according to a loading level of each positive electrode. The charge and the discharge were performed under conditions of constant current (0.2 C) and then constant voltage (4.25 V, 0.05 C cut-off), paused for 10 minutes, and discharged to 3.0 V under conditions of a constant current (0.2 C) at 25 °C.

**Table 1**

| | Positive electrode loading level (mg/cm²) | N/P ratio | |
|---|---|---|---|
| | | charge | discharge |
| Reference Example 1 | 24.0 | 1.10 | 1.14 |
| Reference Example 2 | 25.5 | 1.04 | 1.07 |
| Reference Example 3 | 26.4 | 1.00 | 1.04 |

Referring to Table 1, the first positive electrode active material layer of Example 1 exhibited an N/P ratio of 1.04, if (e.g., when) discharged according to Reference Example 3, and the second positive electrode active material layer of Example 1 exhibited an N/P ratio of 1.14, if (e.g., when) discharged according to Reference Example 1. The N/P ratio of 1.04 of the first positive electrode active material layer during the discharge was lower by 9.6% ({1.14 - 1.04}/1.04 x 100) than 1.14 of that of the second positive electrode active material, in which each positive electrode active material was utilized in a similar amount to that of the double-surface active material layer under the condition of Reference Example 2.

### Evaluation Example 1

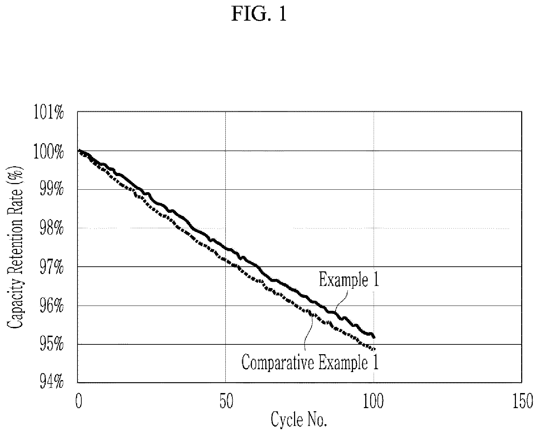

The rechargeable lithium battery cells of Example 1 and Comparative Example 1 were each initially charged and discharged under the same condition as the reference examples and then, measured with respect to initial charge capacity and initial discharge capacity, which were utilized to calculate a ratio of the latter (initial discharge capacity) to the former (initial charge capacity), and the results are shown as efficiency in Table 2. After the initial charge and discharge, the cells were each 100 times charged and discharged at 0.5 C/0.5 C. A ratio of discharge capacity at each cycle to the initial discharge capacity, that is, cycle-life characteristics were evaluated, and the results are shown in FIG. 1.

**Table 2**

| | Charge capacity (mAh/g) | Discharge capacity (mAh/g) | Efficiency (%) |
|---|---|---|---|
| Example 1 | 240.3 | 206.1 | 85.8 |
| Comparative Example 1 | 240.7 | 205.2 | 85.3 |

Referring to Table 2 and FIG. 1, the positive electrode of Example 1 exhibited increased initial discharge capacity and efficiency and thus much improved cycle-life characteristics, compared with that of Comparative Example 1 having the same loading level on both surfaces (e.g., opposite surfaces or sides) of the positive electrode.

### Evaluation Example 2

For reference, a coin half-cell was manufactured by utilizing a mixed positive electrode active material of large secondary particles and small secondary particles as in Comparative Examples 2 and 3 (referred to as Reference Example 4), and another coin half-cell was manufactured by utilizing a mixed positive electrode active material of the large secondary particles and small single particles as in Reference Example 1, and the cells were each initially charged and discharged under the same condition as in Reference Examples 1 to 3. In Table 3, initial charge and discharge capacity and efficiency thereof are shown.

**Table 3**

| | Charge capacity (mAh/g) | Discharge capacity (mAh/g) | Efficiency (%) |
|---|---|---|---|
| Reference Example 4 | 240.8 | 214.2 | 89.0 |
| Reference Example 1 | 241.5 | 210.6 | 87.2 |

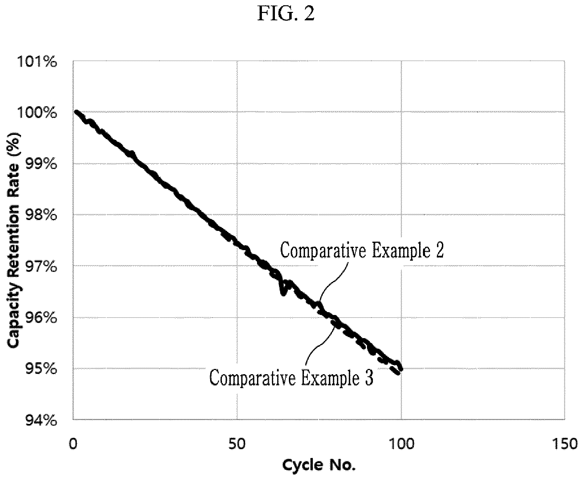

Referring to Table 3, Reference Example 4 corresponding to Comparative Examples 2 and 3 exhibited initial charge and discharge efficiency of 89.0% or more, but Reference Example 1 corresponding to the example exhibited initial charge and discharge efficiency of 87.2% or so. Herein, the rechargeable lithium battery cells of Comparative Examples 2 and 3 were each evaluated with respect to cycle-life characteristics under the same condition as in Evaluation Example 1, and the results are shown as capacity retention rate in FIG. 2, which are not much different between Comparative Examples 2 and 3. In other words, Comparative Examples 2 and 3 utilizing a type or kind of positive electrode active material with initial efficiency of 89% or more, even though designed to have a different loading level (or a different N/P ratio) on both surfaces (e.g., opposite surfaces or sides) of each positive electrode, had no difference in effect. In contrast, Example 1 utilizing a type or kind of positive electrode active material with initial efficiency of less than 89%, in which a loading level of each positive electrode was designed to be different on both surfaces (e.g., opposite surfaces or sides) at a specific level, exhibited increased specific capacity and improved cycle-life characteristics.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While the present disclosure has been described in connection with what is presently considered to be practical example embodiments, it is to be understood that the disclosure is not limited to the disclosed embodiments. In contrast, it is intended to cover one or more suitable modifications and equivalent arrangements included within the scope of the appended claims and equivalents thereof.

Embodiments are set out in the following clauses:
Clause 1. A positive electrode comprising:
   a positive electrode current collector;
   a first positive electrode active material layer on a surface of the positive electrode current collector; and
   a second positive electrode active material layer on another surface of the positive electrode current collector,
   wherein,
   a loading level of the first positive electrode active material layer is about 5% or more higher than a loading level of the second positive electrode active material layer,
   each of the first positive electrode active material layer and the second positive electrode active material layer comprises a first positive electrode active material in the form of secondary particles comprising a plurality of primary particles and a second positive electrode active material in the form of single particles,
   an average particle diameter (D₅₀) of secondary particles of the first positive electrode active material is larger than an average particle diameter (D₅₀) of single particles of the second positive electrode active material, and
   the first positive electrode active material and the second positive electrode active material each independently comprise a compound represented by Chemical Formula 1 or a compound represented by Chemical Formula 2:

      [Chemical Formula 1] Liₐ₁Niₓ₁M¹_{y1}M²_{z1}O_{2-b1}X_{b1}
   in Chemical Formula 1, 0.9≤a1≤1.2, 0.88≤x1≤1, 0≤y1≤0.12, 0≤z1≤0.12, 0.9≤ x1+y1+z1≤1.1, and 0≤b1≤0.1, M¹ and M² being each independently one or more elements selected from among Al, B, Ba, Ca, Ce, Co, Cr, Cu, Fe, Mg, Mn, Mo, Nb, Si, Sn, Sr, Ti, V, W, Zn, and Zr, and X being one or more elements selected from among F, P, and S,

      [Chemical Formula 2] Liₐ₂Niₓ₂Mn_{y2}M³_{z2}O_{2-b2}X_{b2}
   in Chemical Formula 2, 0.9≤a2≤1.8, 0.7≤x2<1, 0<y2≤0.3, 0≤z2≤0.3, 0.9≤ x2+y2+z2≤1.1, and 0≤b2≤0.1, M³ being one or more elements selected from among Al, B, Ba, Ca, Ce, Cr, Cu, Fe, Mg, Mo, Nb, Si, Sn, Sr, Ti, V, W, Zn, and Zr, and X being one or more elements selected from among F, P, and S, and
   wherein the positive electrode is for a stack-type rechargeable lithium battery.
Clause 2. The positive electrode of clause 1, wherein,
   a ratio (N/P ratio) of a negative electrode plate capacity to a positive electrode plate capacity during discharge of the first positive electrode active material layer is lower than an N/P ratio of a negative electrode plate capacity to a positive electrode plate capacity during discharge of the second positive electrode active material layer.
Clause 3. The positive electrode of clause 1 or clause 2, wherein,
   an N/P ratio of the first positive electrode active material layer during discharge is about 5% or more lower than an N/P ratio of the second positive electrode active material layer during discharge.
Clause 4. The positive electrode of any one of clauses 1 to 3, wherein,
   an N/P ratio of the second positive electrode active material layer when charging is greater than or equal to about 1.
Clause 5. The positive electrode of any one of clauses 1 to 4, wherein,
   a current density of the positive electrode is greater than or equal to about 4 mA/cm².
Clause 6. The positive electrode of any one of clauses 1 to 5, wherein,
   initial charge/discharge efficiency of the positive electrode is less than about 89%.
Clause 7. The positive electrode of any one of clauses 1 to 6, wherein,
   an average particle diameter (D₅₀) of the secondary particles of the first positive electrode active material is about 5 µm to about 25 µm, and
   an average particle diameter (D₅₀) of the single particles of the second positive electrode active material is about 1 µm to about 10 µm.
Clause 8. The positive electrode of any one of clauses 1 to 7, wherein,
   in a positive electrode active material layer selected from among the first positive electrode active material layer and the second positive electrode active material layer, the first positive electrode active material is in an amount of about 60 wt% to about 95 wt% and the second positive electrode active material is in an amount of about 5 wt% to about 40 wt% based on a total amount of the first positive electrode active material and the second positive electrode active material.
Clause 9. A stack-type rechargeable lithium battery comprising the positive electrode of clause 1 and a negative electrode.
Clause 10. The stack-type rechargeable lithium battery of clause 9, wherein,
   the negative electrode comprises a carbon-based negative electrode active material, a lithium metal, a lithium metal alloy, a silicon-based negative electrode active material, a tin-based negative electrode active material, a transition metal oxide, or a combination thereof.
Clause 11. The stack-type rechargeable lithium battery of clause 9 or clause 10, wherein,
   the negative electrode comprises a negative electrode current collector, a first negative electrode active material layer on a surface of the negative electrode current collector, and a second negative electrode active material layer on another surface of the negative electrode current collector, and
   a difference between a loading level of the first negative electrode active material layer and a loading level of the second negative electrode active material layer is about 0 mg/cm² to about 0.6 mg/cm².
Clause 12. The stack-type rechargeable lithium battery of any one of clauses 9 to 11, wherein,
   a ratio (N/P ratio) of a negative electrode plate capacity to a positive electrode plate capacity during discharge of the first positive electrode active material layer is lower than an N/P ratio of a negative electrode plate capacity to a positive electrode plate capacity during discharge of the second positive electrode active material layer.
Clause 13. The stack-type rechargeable lithium battery of any one of clauses 9 to 12, wherein,
   an N/P ratio of the first positive electrode active material layer during discharge is about 5% or more lower than an N/P ratio of the second positive electrode active material layer during discharge.
Clause 14. The stack-type rechargeable lithium battery of any one of clauses 9 to 13, wherein,
   an N/P ratio of the second positive electrode active material layer when charging is greater than or equal to about 1.
Clause 15. The stack-type rechargeable lithium battery of any one of clauses 9 to 14, wherein,
   a current density of the positive electrode is greater than or equal to about 4 mA/cm².
Clause 16. The stack-type rechargeable lithium battery of any one of clauses 9 to 15, wherein,
   initial charge/discharge efficiency of the positive electrode is less than about 89%.
Clause 17. The stack-type rechargeable lithium battery of any one of clauses 9 to 16, wherein,
   an average particle diameter (D₅₀) of the secondary particles of the first positive electrode active material is about 5 µm to about 25 µm, and
   an average particle diameter (D₅₀) of the single particles of the second positive electrode active material is about 1 µm to about 10 µm.
Clause 18. The stack-type rechargeable lithium battery of any one of clauses 9 to 17, wherein,
   in a positive electrode active material layer selected from the first positive electrode active material layer and the second positive electrode active material layer, the first positive electrode active material is in an amount of about 60 wt% to about 95 wt% and the second positive electrode active material is in an amount of about 5 wt% to about 40 wt% based on a total amount of the first positive electrode active material and the second positive electrode active material.

## Claims

1. A positive electrode comprising:
a positive electrode current collector;
a first positive electrode active material layer on a surface of the positive electrode current collector; and
a second positive electrode active material layer on another surface of the positive electrode current collector,
wherein,
a loading level of the first positive electrode active material layer is higher than a loading level of the second positive electrode active material layer by about 5% or more,
each of the first positive electrode active material layer and the second positive electrode active material layer comprises a first positive electrode active material in the form of secondary particles comprising a plurality of primary particles and a second positive electrode active material in the form of single particles,
an average particle diameter (D₅₀) of secondary particles of the first positive electrode active material is larger than an average particle diameter (D₅₀) of single particles of the second positive electrode active material, and
the first positive electrode active material and the second positive electrode active material each independently comprise a compound represented by Chemical Formula 1 or a compound represented by Chemical Formula 2:
[Chemical Formula 1] Liₐ₁Niₓ₁M¹_{y1}M²_{z1}O_{2-b1}X_{b1}
in Chemical Formula 1, 0.9≤a1≤1.2, 0.88≤x1≤1, 0≤y1≤0.12, 0≤z1≤0.12, 0.9≤ x1+y1+z1≤1.1, and 0≤b1≤0.1, M¹ and M² being each independently one or more elements selected from among Al, B, Ba, Ca, Ce, Co, Cr, Cu, Fe, Mg, Mn, Mo, Nb, Si, Sn, Sr, Ti, V, W, Zn, and Zr, and X being one or more elements selected from among F, P, and S,
[Chemical Formula 2] Liₐ₂Niₓ₂Mn_{y2}M³_{z2}O_{2-b2}X_{b2}
in Chemical Formula 2, 0.9≤a2≤1.8, 0.7≤x2<1, 0<y2≤0.3, 0≤z2≤0.3, 0.9≤ x2+y2+z2≤1.1, and 0≤b2≤0.1, M³ being one or more elements selected from among Al, B, Ba, Ca, Ce, Cr, Cu, Fe, Mg, Mo, Nb, Si, Sn, Sr, Ti, V, W, Zn, and Zr, and X being one or more elements selected from among F, P, and S, and
wherein the positive electrode is for a stack-type rechargeable lithium battery.

2. The positive electrode as claimed in claim 1, wherein,
a ratio (N/P ratio) of a negative electrode plate capacity to a positive electrode plate capacity during discharge of the first positive electrode active material layer is lower than an N/P ratio of a negative electrode plate capacity to a positive electrode plate capacity during discharge of the second positive electrode active material layer.

3. The positive electrode as claimed in claim 1 or claim 2, wherein,
an N/P ratio of the first positive electrode active material layer during discharge is lower than an N/P ratio of the second positive electrode active material layer during discharge by about 5% or more.

4. The positive electrode as claimed in any one of claims 1 to 3, wherein,
an N/P ratio of the second positive electrode active material layer when charging is greater than or equal to about 1.

5. The positive electrode as claimed in any one of claims 1 to 4, wherein,
a current density of the positive electrode is greater than or equal to about 4 mA/cm².

6. The positive electrode as claimed in any one of claims 1 to 5, wherein,
initial charge/discharge efficiency of the positive electrode is less than about 89%.

7. The positive electrode as claimed in any one of claims 1 to 6, wherein,
an average particle diameter (D₅₀) of the secondary particles of the first positive electrode active material is about 5 µm to about 25 µm, and
an average particle diameter (D₅₀) of the single particles of the second positive electrode active material is about 1 µm to about 10 µm.

8. The positive electrode as claimed in any one of claims 1 to 7, wherein,
in a positive electrode active material layer selected from among the first positive electrode active material layer and the second positive electrode active material layer, the first positive electrode active material is in an amount of about 60 wt% to about 95 wt% and the second positive electrode active material is in an amount of about 5 wt% to about 40 wt% based on a total amount of the first positive electrode active material and the second positive electrode active material.

9. A stack-type rechargeable lithium battery comprising the positive electrode as claimed in any one of claims 1 to 8and a negative electrode.

10. The stack-type rechargeable lithium battery as claimed in claim 9, wherein,
the negative electrode comprises a carbon-based negative electrode active material, a lithium metal, a lithium metal alloy, a silicon-based negative electrode active material, a tin-based negative electrode active material, a transition metal oxide, or a combination thereof.

11. The stack-type rechargeable lithium battery as claimed in claim 9 or claim 10, wherein,
the negative electrode comprises a negative electrode current collector, a first negative electrode active material layer on a surface of the negative electrode current collector, and a second negative electrode active material layer on another surface of the negative electrode current collector, and
a difference between a loading level of the first negative electrode active material layer and a loading level of the second negative electrode active material layer is about 0 mg/cm² to about 0.6 mg/cm².
